# EUROPEAN PATENT SPECIFICATION

(11) **EP 2 471 383 B1**
(45) Date of publication and mention of the grant of the patent: **31.05.2017**
(21) Application number: 10811527.0
(22) Date of filing: 27.08.2010
(51) Int. Cl.: A23L 2/60, A23L 19/18, A23L 27/00, A23L 27/30

(54) **TASTE IMPROVER FOR HIGH INTENSITY SWEETENER**
GESCHMACKSVERBESSERER FÜR HOCHINTENSIVEN SÜSSSTOFF
AMÉLIORANT DE GOÛT POUR ÉDULCORANT À HAUTE INTENSITÉ

(30) Priority: 27.08.2009 JP 2009197232
(43) Date of publication of application: 04.07.2012
(73) Proprietor: Ogawa & Co., Ltd., Tokyo 103-0023 (JP)
(72) Inventor: MIYAZAWA, Toshio, Urayasu-shi Chiba 279-0032 (JP); ASAI, Yasutaka, Urayasu-shi Chiba 279-0032 (JP); YAMAGUCHI, Hirotoshi, Urayasu-shi Chiba 279-0032 (JP); UESUGI, Takashi, Urayasu-shi Chiba 279-0032 (JP); MURANISHI, Shuichi, Urayasu-shi Chiba 279-0032 (JP)
(74) Representative: Henkel, Breuer & Partner
(86) International application number: PCT/JP2010/005293
(87) International publication number: WO 2011/024471

(56) References cited:
- WO-A1-2006/087991
- WO-A2-2008/057967
- SHYAMALA B.N. ET AL: 'Studies on the antioxidant activities of natural vanilla extract and its constituent compounds through in vitro models' J.AGRIC.FOOD CHEM. vol. 55, no. 19, 2007, pages 7738 - 7743, XP008162122

## Description

### TECHNICAL FIELD

The present invention relates to a taste improver for high intensity sweetener. More specifically, the present invention relates to a taste improver which is capable of improving unpleasant aftertastes such as bitter taste, harsh taste, acrid taste, and astringent taste of a high intensity sweetener as well as of imparting taste intensity and a flavor profile which are the same as those attained by using sucrose even when the high intensity sweetener is used.

### BACKGROUND ART

Due to the recent increase in health consciousness, products using low calorie high intensity sweeteners such as aspartame, stevia, acesulfame K, and sucralose have increased. The high intensity sweeteners have the excellent property of having sweetness which is several-hundred times of that of sucrose, while many of them have peculiar bitter taste and harsh taste. Further, the sweetness sustains for a long time to entail undesirable lingering sweetness, and a sweetness-developing property thereof is different from that of sucrose. Further, as compared to sucrose, the high intensity sweeteners have drawbacks of insufficient taste intensity and a change in flavor profile. Therefore, improvement in taste is the greatest issue for more versatile use of the high intensity sweeteners.

As to the taste improvement of high intensity sweeteners, the method of using an amino acid such as L-asparagine or an organic acid such as gluconic acid and citric acid or a salt thereof (Patent Documents 1 to 3); the method of combining a high intensity sweeteners and a natural substance such as rutin and hesperidin (Patent Documents 4 and 5) ; the method of using sugars such as a galactomannan decomposition product, nigero-oligosaccharide, beet oligosaccharide, and mannose for taste improvement of a high intensity sweetener (Patent Documents 6 to 9) ; the method of adding a plant-derived extract such as a sugarcane-derived bagasse extract and an enzyme-treated gingko extract to a high intensity sweetener (Patent Documents 10 and 11) ; and so forth have been proposed, but the existing methods have the problems that a small added amount does not attain a satisfactory reduction of the unpleasant aftertastes and that an increase in added amount causes a change in original taste and flavor of food.

Meanwhile, the inventors proposed the method of suppressing the unpleasant aftertastes of high intensity sweeteners by using as a sweetness improver quinic acid obtained by purifying a processed matter obtained by subjecting coffee beans to hydrolysis with an enzyme or alkali ,spilanthol, or a plant extract or essential oil containing spilanthol (Patent Documents 12 and 13). The methods are capable of effectively suppressing the unpleasant aftertastes of high intensity sweeteners with a small added amount without changing original flavor and taste of food.

### CITATION LIST

### Patent Document

Patent Document 1: Japanese Patent Application Laid-Open Publication No. 2000-270804
Patent Document 2: Japanese Patent Application Laid-Open Publication No. 2003-210147
Patent Document 3: Japanese Patent Application Laid-Open Publication No. 60-188035
Patent Document 4: Japanese Patent Application Laid-Open Publication No. 10-146165
Patent Document 5: Japanese Patent Application Laid-Open Publication No. 8-256725
Patent Document 6: Japanese Patent Application Laid-Open Publication No. 9-19268
Patent Document 7: Japanese Patent Application Laid-Open Publication No. 10-234331
Patent Document 8: Japanese Patent Application Laid-Open Publication No. 2000-197462
Patent Document 9: Japanese Patent Application Laid-Open Publication No. 2002-272411
Patent Document 10: Japanese Patent Application Laid-Open Publication No. 2000-217540
Patent Document 11: Japanese Patent Application Laid-Open Publication No. 2003-180288
Patent Document 12: Japanese Patent No. 4068788
Patent Document 13: Japanese Patent Application Laid-Open Publication No. 2006-223104

### DISCLOSURE OF INVENTION

### Problems to be Solved by the Invention

However, with the methods disclosed in Patent Documents 12 and 13, reproduction of taste intensity and a flavor profile is not satisfactory as compared to sucrose, and there is a room for improvement.

An object to be attained by the present invention is to provide a taste improver which is capable of effectively suppressing unpleasant bitter taste, harsh taste, and astringent taste peculiar to a high intensity sweetener without changing original flavor and taste of food and of reproducing taste intensity and a flavor profile which are equal to those attained by using sugars such as sucrose even when the high intensity sweetener is used.

### Means for Solving the Problems

The inventors had conducted researches in order to attain the above-described object and accomplished the present invention based on the findings that it is possible to suppress the unpleasant tastes of a high intensity sweetener and to reproduce taste intensity and a flavor profile which are equal to those attained by using sugars such as sucrose even when the high intensity sweetener is used, by combining (A) spilanthol, (B) quinic acid, and (C) a composition containing polyphenol obtained by subjecting a vanilla bean residue after removal of an aromatic component to extraction with a hydrous organic solvent.

The present invention is defined by the claims and has the following configurations.
(1) A taste improver for high intensity sweetener, that comprises A: spilanthol or an extract or essential oil of a plant containing spilanthol, B: quinic acid or a composition containing quinic acid, and C: a composition containing polyphenol obtained by subjecting a vanilla bean residue after removal of an aromatic component to extraction with a hydrous organic solvent.
(2) The taste improver for high intensity sweetener according to (1), characterized by further containing at least one of D: green tea polyphenol or a composition containing green tea polyphenol and E: rosaceous plant polyphenol or a composition containing rosaceous plant polyphenol.
(3) The taste improver for high intensity sweetener according to (1), wherein the plant containing spilanthol is Spilanthes acmella or Spilanthes acmella var. oleracea.
(4) The taste improver for high intensity sweetener according to (1), wherein the composition containing quinic acid includes a coffee bean hydrolysate containing a quinic acid derivative obtained by purifying a hydrolysis product after subjecting a coffee bean extract to hydrolysis.
(5) The taste improver for high intensity sweetener according to (1), wherein the composition containing quinic acid includes a purified matter obtained by obtaining an extraction liquid by subjecting tea leaves to extraction with water and then subjecting the extraction liquid to purification with an adsorbent.
(6) The taste improver for high intensity sweetener according to (1), wherein the composition containing polyphenol includes a purified matter obtained by obtaining an extraction liquid by subjecting a vanilla bean residue after removal of an aromatic component to extraction with a hydrous organic solvent and then subjecting the extraction liquid to purification with an adsorbent.
(7) The taste improver for high intensity sweetener according to (2), wherein the composition containing rosaceous plant polyphenol includes extract obtained by subjecting a rosaceous plant to extraction with water and/or a polar organic solvent.
(8) The taste improver for high intensity sweetener according to (1), wherein the high intensity sweeteners is aspartame, sucralose, acesulfame-K, stevia, or neotame.
(9) A method of improving a taste of a high intensity sweetener, characterized by adding the taste improver for high intensity sweeteners according to (1) or (2) to the high intensity sweetener or a beverage or food containing the high intensity sweetener.
(10) A flavoring composition for high intensity sweetener-containing beverage or food, characterized by containing the taste improver for high intensity sweetener according to (1) or (2) combined with any other desired flavoring components.
(11) A high intensity sweetener composition,a beverage or food characterized by containing a high intensity sweetener and the taste improver for high intensity sweetener according to (1) or (2).

### EFFECTS OF THE INVENTION

A small added amount of a taste improver for high intensity sweetener of the present invention enables to prominently suppress unpleasant bitter taste, harsh taste, and astringent taste and lingering sweetness in its aftertaste which are peculiar to a high intensity sweetener. Further, the taste improver enables to reproduce taste intensity and a flavor profile which are equal to those attained by using sugars such as sucrose even when the high intensity sweetener is used.

### MODE FOR CARRYING OUT THE INVENTION

### (A) Spilanthol

The spilanthol used for the invention is a pungent component found in Spilanthes acmella, Spilanthes acmella var. oleracea, and other varieties. Spilanthol can be obtained by extraction and purification from these plants, or it may be chemically synthesized. Spilanthol obtained by any such methods may be used for the invention, and it does not need to be a highly purified form. Spilanthol-containing plant extracts or essential oils may be used without purification so long as their tastes and odors do not adversely affect the flavor of a beverage or food. From the viewpoint of safety it is preferred to use extracts or essential oils obtained from proven edible plants, while from the viewpoint of supply, cost and other practical factors, it is particularly preferred to use extracts or essential oils of Spilanthes acmella or Spilanthes acmella var. oleracea, which have high spilanthol contents.

The spilanthol may be obtained by extraction or distillation from the total herb or flower head of Spilanthes acmella or Spilanthes acmella var. oleracea, which have high spilanthol contents. Hereinafter, the extraction method will be exemplified. Flower heads of Spilanthes acmella or Spilanthes acmella var. oleracea are dried and crushed and then subjected to extraction with an organic solvent to obtain a spilanthol-containing extract. The organic solvent used for extraction is not particularly restricted, and may be alcohols such as methanol, ethanol, propanol, and propylene glycol, ketones such as acetone, esters such as ethyl acetate, ethers such as diethyl ether or hydrocarbons such as hexane and heptane, either alone or in admixture as appropriate. A polar organic solvent such as alcohols is preferred, with ethanol being particularly preferred from the standpoint of safety. The solvent is distilled off from the obtained extract solution to obtain the spilanthol-containing extract.

The spilanthol-containing extract may be used directly, but in cases where components other than the spilanthol in the extract may adversely affect the flavor of the beverage or food, it is preferred to increase the spilanthol content by using a purification method such as molecular distillation, thin film distillation, and various chromatography, or by using combination of these purification methods appropriately.

### (B) Quinic Acid

Cranberry juice and the like possess a large amount of quinic acid (1,3,4,5-tetrahydroxycyclohexane-1-carboxylic acid) to be used in the present invention, and the quinic acid is found in wide variety of plants as a quinic acid derivative such as chlorogenic acid and can be obtained by a method such as extraction from plant. Further, it is possible to chemically synthesize quinic acid, and the quinic acid is commercially available as a reagent and the like. In the present invention, it is possible to use the commercially available quinic acid as it is as a taste improver, but, in view of the use of the taste improver for beverages and foods, it is preferable to use a composition containing quinic acid which is obtained from an edibility plant raw material such as fruit juice, tea, and coffee, and it is particularly preferable to use tea leaves or coffee beans which contain a large amount of quinic acid and are easily available as the raw material. More specifically, according to the method disclosed in Japanese Patent Application Laid-Open Publication No.2007-14212, it is possible to obtain the quinic acid by subjecting tea leaves to extraction with water. Further, according to the method disclosed in Japanese Patent Application Laid-Open Publication No.2001-321115, it is possible to obtain the quinic acid by subjecting green coffee beans to hydrolysis using an alkali or an enzyme.

### (C) Vanilla Polyphenol

The vanilla polyphenol to be used in the present invention is polyphenol extracted from a vanilla bean residue after removal of an aromatic component. Since generation of vanillin is less in young beans immediately after picking, the young beans are preferred as the raw material for the taste improver having great versatility due to the less vanilla flavor. More preferably, the distillation or extraction residue after recovery of an aromatic component such as vanillin, anis alcohol, anis aldehyde, and benzaldehyde contained in the ripen vanilla beans is advantageous from the viewpoints of effective use of unutilized resource and cost and further has the advantage that the obtained extract has less flavor and great versatility. Examples of a method for eliminating the aromatic component include a distillation method, a column method, and solvent extraction. Hereinafter, the distillation method will be exemplified. Vanilla beans (raw material) are cut or, preferably, pulverized by using a homogenizer or the like for the purpose of enhancing extraction efficiency and then transferred to an distillation apparatus, followed by gradual heating under a reduced pressure. Thus, the aromatic components are eliminated as a distillate.

According to the invention, an extraction liquid containing vanilla polyphenol is obtained by subjecting a vanilla bean residue after elimination of aromatic components to extraction with a hydrous organic solvent. The organic solvent to be used for the extraction is not particularly limited insofar as the organic solvent is miscible in water, and examples thereof include a lower alcohol such as methanol, ethanol, propanol, and isopropanol; a polyvalent alcohol such as ethylene glycol, propylene glycol, and glycerin; acetone; and the like, which may be used alone or in combination of two or more. Preferably, ethanol may be used. Each of these solvent is mixed with water in use. A mixing ratio (by mass) between the organic solvent and water may be about 100:5 to 900, preferably 100:30 to 300. Hereinafter, the extraction will be exemplified. In the case of water-ethanol mixed solvent system (50:50 mass ratio) extraction, 1000 parts by mass of the mixed solvent is added to 100 parts by mass of the vanilla beans extraction residue, and the extraction is performed at 60°C to 80°C for several minutes to several hours, preferably 30 to 60 minutes, followed by filtration, thereby obtaining the vanilla polyphenol-containing extract.

The obtained vanilla polyphenol-containing extract may be used as it is, but, in the case where influences to be exerted on a flavor of a beverage or food by the components other than the vanilla polyphenol contained in the extract can be problematic, it is preferable to increase a vanilla polyphenol content by employing a purification method such as molecular distillation, thin film distillation, and various chromatographies alone or in appropriate combination thereof.

Hereinafter, the purification method will be exemplified. The purification method is performed by treating the vanilla polyphenol-containing extract with an adsorbent, and polyphenol is contained in a fraction adsorbed by the adsorbent. By eluting the adsorbed fraction with a hydrous alcohol (e.g. ethanol), the polyphenol fraction is purified. The polyphenol fraction may subsequently be concentrated.

The taste improver for high intensity sweetener of the present invention is characterized by containing (A) spilanthol, (B) quinic acid, and (C) vanilla polyphenol, and the effects thereof are improved by using in combination (D) green tea polyphenol and/or (E) rosaceous plant polyphenol described below.

### (D) Green Tea Polyphenol

As green tea polyphenol to be used in the present invention, various green tea polyphenols can be used without any particular limitations to a production method and an extraction method insofar as the green tea polyphenol is polyphenol extracted from green tea leaves. For example, a polyphenol extraction liquid of green tea leaves can be obtained by concentrating an extraction liquid obtained by subjecting green tea leaves to extraction with hot water or a water-soluble organic solvent according to the method disclosed in Japanese Patent Application Laid-Open Publication No. 59-219384, Japanese Patent Application Laid-Open Publication No. 4-20589, Japanese Patent Application Laid-Open Publication No. 5-260907, Japanese Patent Application Laid-Open Publication No. 5-306279, or the like. Examples of a commercially available product include "Polyphenon" (registered trademark) manufactured by Tokyo Food Techno Co., Ltd., "Teaflan" (registered trademark) manufactured by Ito En, Ltd., "Sunphenon" manufactured by Taiyo Kagaku Co., / Ltd., and the like, without any particular limitations thereto.

### (E) Rosaceous Plant Polyphenol

As rosaceous plant polyphenol to be used in the present invention, various rosaceous plant polyphenols can be used without any particular limitations to a production method and an extraction method insofar as the rosaceous plant polyphenol is polyphenol extracted from a rosaceous plant. Examples of the rosaceous plant include Rosa gallica, Rosa centifolia, Rosa rugosa, Rosa maikwai, and the like without any particular limitations thereto.

It is possible to collect the rosaceous plant polyphenol by extraction or distillation of total herb or a flower head of the above-described plant. As an exemplification of a method of collection by extraction, a solvent to be used for solvent extraction may be water or a polar organic solvent, and the organic solvent may be hydrous. The polar organic solvent is not particularly limited, and alcohols such as methanol, ethanol, propanol, and propylene glycol; ketones such as acetone; esters such as ethyl acetate; ethers such as diethylether; and hydrocarbons such as hexane and heptane may appropriately be used alone or in combination. The polar organic solvent such as alcohols is preferred, and ethanol is particularly preferred from the viewpoint of safety. An amount of the solvent to be used for the extraction may arbitrarily be selected, but the solvent may ordinarily be used in an amount of 2 to 100 parts by mass, preferably 5 to 20 parts by mass, relative to one part by mass of the above-described raw material. As a pretreatment for the extraction, the raw material may be subjected to defatting operation by using a nonpolar organic solvent such as hexane in order to prevent the unnecessary fat from being extracted during the subsequent extraction. Further, purification such as deodorization is achieved in some cases as a result of defatting operation. A solvent insoluble matter is eliminated from the obtained extraction liquid to obtain the rosaceous plant polyphenol-containing extract.

The obtained rosaceous plant polyphenol-containing extract may be used as it is, but, in the case where influences to be exerted on a flavor of a beverage or food by the components other than the rosaceous plant polyphenol contained in the extract can be problematic, it is preferable to increase a rosaceous plant polyphenol content by employing a purification method such as molecular distillation, thin film distillation, and various chromatographies alone or in appropriate combination thereof. Hereinafter, the purification method will be exemplified. The purification method is performed by treating the rosaceous plant polyphenol-containing extract with an adsorbent, and polyphenol is contained in a fraction adsorbed by the adsorbent. By eluting the adsorbed fraction with a hydrous alcohol (ethanol and the like), the polyphenol fraction is purified. The polyphenol fraction may subsequently be subjected to concentration.

When the taste improver of the present invention is directly added to a high intensity sweetener, taste intensity and a flavor profile which are equal to those attained by using sucrose and the like are reproduced, and it is possible to obtain a high intensity sweetener composition which is improved in unpleasant aftertastes which are peculiar to the high intensity sweetener. In the case of obtaining the high intensity sweetener composition, various sugars, an organic acid, starch, dextrin and food fiber, an ordinarily used dispersant and excipient, and the like may appropriately be contained in addition to the high intensity sweetener and the taste improver of the present invention. Further, by adding the taste improver to a beverage or food containing a high intensity sweetener, it is possible to suppress the unpleasant aftertastes of the high intensity sweetener and to improve a taste of the beverage or food. The effect of suppressing unpleasant aftertastes peculiar to high intensity sweetener, the taste improving effect, and the effect of reproducing flavor profile are not sufficiently attained in the case where added amounts of the components of the taste improver are too small with respect to the high intensity sweetener, while tastes of the components may be exhibited when the added amounts are too large. Therefore, in the case of adding the taste improver of the present invention to a high intensity sweetener, it is appropriate to add the components so that (A) a spilanthol content is 10 to 10000 ppm, preferably 100 to 1000 ppm, (B) a quinic acid content is 50 to 10000 ppm, preferably 500 to 5000 ppm, and (C) a vanilla polyphenol-containing extract solid content is 500 to 500000 ppm, preferably 5000 to 250000 ppm, to the high intensity sweetener. In the case of direct addition to a beverage or food containing a high intensity sweetener, it is appropriate to add the components so that (A) a spilanthol content is 0.01 to 10 ppm, preferably 0.1 to 1 ppm, (B) a quinic acid content is 0.005 to 10 ppm, preferably 0.05 to 5 ppm, and (C) a vanilla polyphenol-containing extract solid content is 0.5 to 500 ppm, preferably 5 to 250 ppm, in the beverage or food which is the end product. Further, in the case of using (D) green tea polyphenol and/or (E) rosaceous plant polyphenol in combination, it is appropriate to add the taste improver to the high intensity sweetener so that (D) a green tea polyphenol-containing extract solid content is 500 to 500000 ppm, preferably 5000 to 250000 ppm and (E) a rosaceous plant polyphenol-containing extract solid content is 500 to 500000 ppm, preferably 5000 to 250000 ppm, to the high intensity sweetener. In the case of direct addition to a beverage or food containing a high intensity sweetener, it is appropriate to add the taste improver so that (D) a green tea polyphenol-containing extract solid content is 0.5 to 500 ppm, preferably 5 to 250 ppm and (E) a rosaceous plant polyphenol-containing extract solid content is 0.5 to 500 ppm, preferably 5 to 250 ppm, in the beverage or food which is the end product.

In the present invention, the high intensity sweetener means a sweetener having sweetness which is several hundreds to several thousands times of that of sucrose, and examples thereof include stevia, a licorice extract, thaumatin, glycyrrhizin, disodium glycyrrhizinate, ammonium glycyrrhizinate, saccharine, saccharine sodium, aspartame, acesulfame K, sucralose, alitame, neotame, erythritol, and the like. The taste improver of the present invention can be used without any particular limitations to the type of high intensity sweetener, but the use for aspartame, stevia, sucralose, acesulfame K, or neotame is preferred.

The taste improver for high intensity sweetener of the invention may be added alone to a beverage and food containing high intensity sweetener, but it may also be combined with any other desired flavoring components for use in a flavoring composition for a beverage and food containing high intensity sweetener. Flavoring components to be used in combination therewith are not particularly restricted, and as suitable examples there may be mentioned synthetic and natural-derived flavorings such as ethyl acetoacetate, acetophenone, anisaldehyde, α-amylcinnamaldehyde, methyl anthranilate, ionone, isoeugenol, isoamyl isovalerate, ethyl isovalerate, allyl isothiocyanate, 3-butenyl isothiocyanate, 4-pentenyl isothiocyanate, benzyl isothiocyanate, 3-methylthiopropyl isothiocyanate, other isothiocyanates, indole and its derivatives, γ-undecalactone, esters, ethylvanillin, ethers, eugenol, octanol, octanal, ethyl octanoate, isoamyl formate, geranyl formate, citronellyl formate, cinnamic acid, ethyl cinnamate, methyl cinnamate, ketones, geraniol, isoamyl acetate, ethyl acetate, geranyl acetate, cyclohexyl acetate, citronellyl acetate, cinnamyl acetate, terpinyl acetate, phenethyl acetate, butyl acetate, benzyl acetate, 1-methyl acetate, linalyl acetate, methyl salicylate, cyclohexylallyl propionate, citral, citronellal, citronellol, 1,8-cineol, fatty acids, aliphatic higher alcohols, aliphatic higher aldehydes, aliphatic higher hydrocarbons, cinnamyl alcohol, cinnamaldehyde, thioethers, thiols, decanal, decanol, ethyl decanoate, terpineol, limonene, pinene, myrcene, terpinolene, terpene-based hydrocarbons, γ-nonalactone, vanillin, paramethylacetophenone, hydroxycitronellal, hydroxycitronellaldimethylacetal, piperonal, isoamyl phenylacetate, isobutyl phenylacetate, ethyl phenylacetate, phenol ethers, phenols, furfural and its derivatives, propionic acid, isoamyl propionate, ethyl propionate, benzyl propionate, hexanoic acid, allyl hexanoate, ethyl hexanoate, ethyl heptanoate, 1-perillaldehyde, benzyl alcohol, benzaldehyde, aromatic alcohols, aromatic aldehydes, d-borneol, maltol, methyl N-methylanthranilate, methyl β-naphthylketone, dl-menthol, 1-menthol, butyric acid, isoamyl butyrate, ethyl butyrate, cyclohexyl butyrate, butyl butyrate, lactones, linalool and the like; Essential oils of citrus fruits such as orange, lemon, lime and grapefruit, essential oils or recovered flavors of fruits such as apple, banana, grape, melon, peach, pineapple and strawberry, extract flavors of dairy products such as such as milk, cream, butter, cheese and yogurt, recovered flavors of palatable products such as green tea, black tea, coffee and cocoa, or essential oils of mints such as peppermint and spearmint, as well as spice extracts obtained from hemp seed, asafoetida, ajowan, anise, angelica, fennel, turmeric, oregano, allspice, orange peel, szechuan pepper, cassia, chamomile, brassica juncea, cardamom, curry tree or curry-leaf tree, liquorice, caraway, zhi pear, cumin, water cress, clove, poppy seed, caper, pepper, sesame, coriander, sassafras, saffron, savory, salvia, sichuan pepper, beefsteak plant, cinnamon, shallot, juniper berry, ginger, star anise, spearmint, horseradish, celery, sorrel, thyme, onion, tamarind, tarragon, chive, dill, pepper, nutmeg, wormwood, nigella, ginseng, garlic, basil, parsley, peppermint, vanilla, bell pepper, hyssop, Fenugreek, peppermint, horsemint, horseradish, marjoram, myoga, lavender, linden, lemongrass, lemon balm, rose, rosemary, bay, horseradish and the like, or natural spices obtained from Iceland moss, rehman di huang, akebia, cannabis, asafoetida, maidenhair fern, ajowan, azuki bean, rooibos, applemint, artichoke, anise, avocado, hydrangea, jiaogulan, fritilla lily, amyris, almond, epazote, alkanet, artemisia, arnica, alfalfa, aloe, angostura, angola weed, apricot, chanterelle, angelica, amber, ambergris, ambrette, squid, barrenwort, rush, yeast, Japanese knotweed, strawberry, fig, ginkgo, oxknee, ylangylang, hedysa huang qi, imperatoria, immortelle, wintergreen, watercress, ivy, turmeric, usubasai wild ginger, woodruff, sea urchin, ume, oolong tea, peril sesame, enokitake, shrimp, ebisugusa, erigeron, elder, eleutherococcus, elecampane, elemi, engosaku, huai jiao, endive, blessed thistle, huang lian, plantain, cnidium fruit, krill, oak, oakmoss, mole cricket, osmanthus, opoponax, ominaeshi, water plantain, origanum, orris, olibanum, olive, allspice, orange, orangeflower, seashell, kaininso, cacao, persimmon, fruit vegetables, cashew nut, cascara, cascarilla, castoreum, kataku chestnut, dried skipjack, cassie, purging cassia, catechu, crab, carnation, valerian, chamomile, cajeput, mustard, karasuuri, crowdipper, guarana, calamus, galanga, currant, carissa, Chinese quince, cardamom, galbanum, curry, kawamidori, liquorice, gambir, Chinese olive, kiwifruit, kikaiga seaweed take, baloonflower, ju hua, Jew's ear, kisas bamboo grasse, gishigishi, kidachi aloe, Peruvian bark, kihada, kibanao huang qi, giboshi, gymnema sylvestre, catnip, caraway, carob, cucumber, quillaia, agrimony, guava, guaiacum, gou qi zi, kusasugik cedarura, Japanese quince, kudzu, camphor, kamala, gooseberry, zhi pear, cubeb, bearberry peach, oleaster, cumin, ground ivy, kurara, clary sage, cranberry, chestnut, walnut, cream, grains of paradise, dittany of crete, grapefruit, clover, clove, kuromoji, mulberry, quassia, caper, getto, cade, quebracho, germander, kencur, Japanese rais pear, gennoshoko, koji, koutake, black tea, kohone, coca, skullcap, brown sugar, cereals, coconut, wu zhu yu, pepper, costus, costmary, copaiba, coffee, kobushi, burdock, sesame, cola, coriander, coltsfoot, golden rod, calumba, root vegetable, condurango, comfrey, cypress, fish, cherry flower, cherry, pomegranate, sake cake, bamboo grass, sasakusa, sea buckthorn, sassafras, saffron, sapodilla, cactus, sarashina pearoma, sarsaparilla, salsify, polypore, hawthorn, shan zhu yu, sichuan pepper, Santa herb, sandarac, sandalwood, red sandalwood, shiitake, genet, beefsteak plant, cedar, citrus, citronella, schinus, civet, simaro ruea, shimeji, Chinese peony, jasmin, Mondo grass, jaborandi, shallot, shukusha, juniper berry, ginger, soy, soy sauce cake, spirits, shoro, elm mushroom tamogitake, ginseng, cinnamon, vinegar, watermelon, narcissus, cedar, star anise, starfruit, styrax, terrapin, common stinkhorn, zdravetz, snakeroot, spikenard, spruce, spearmint, purslane, sloe berry, savory, grassy-leaved sweet flag, sage, zedoary, senega, geranium, celery, senkyu, centaury, sendan, St. John's wort, senna, sauce, rhubarb, soybean, thyme, bamboo shoot, octopus, water-pepper, davana, egg, royal agaric, onion, tamarind, damiana, tamogitake, tarragon, angelica tree, tansy, tangerine, dandelion, cherimoya, cherry la bay, wild cherry, Cogon Grass, chicory, cheese, chichitake, chive, chervil, champaca, tuber rose, wu wei zi, chirata, fern-ally, pickled products, ivy, camellia, tsuyukusa, tsuriganeni ginseng, Chinese knotweed, deertongue, thistle, dittany, dill, date, lindera root, tenma, pepper, toki, proteins, oils and fats, molasses, cornsilk, chameleon, eucommia, dog grass, tomato, dragon's blood, dorian, truffle, tolu ruelsum, tonka, naginata koju, pear, nasturtium, nut, fermented soybean, Chinese dates, nutmeg, pink, nameko, naratake, ti-tree, cultured lactic acid bacteria solution, ginseng, garlic, nezumimochi, nettle, silk tree, knotgrass, violet, pineapple, hibiscus, malt, chickweed, basil, lotus, hasukappu, parsley, butter, butter oil, buttermilk, birch, honey, patchouli, peppermint, bagbean, fermented alcoholic beverages, fermented milk, fermented seasoning, passion fruit, hatsutake, buffaloberry, Job's tears, hanasuge, banana, vanilla, honeysuckle, papaya, burberry, hamago, hamasuge, rugosa rose, hama fang feng, winter bloom, rose, palma mallowa, sugar apple, hikiokoshi, water chestnut, pistachio, hyssop, hickory, peanut, cypress, hiba, popsissewa, himehagi, hyacinth, hiratake, loquat, areca nut, feijoa, Fenugreek, fennel, fujibakama, fujimodoki, bran, fusel oil, petitgrain, buchu, grape, wine sake cake, rose apple, beech, bunaharitake, black caraway, blackberry, plum, bryonia, prickly ash, primrose, prunella, blueberry, breadfruit, hay, bay, hazel nut, vetiver, betel, safflower, pennyroyal, peppermint, snake, pepino, peptone, bergamot, bergamot mint, Peru balsam, verbena, veronica, benzoin, rosewood, horehound, haw, houkitake, houshou, fang feng, whey, honoki, horsemint, horseradish, peony, hop, poppy, poplar, papaw, jojoba, sea squirt, bordeaux, boronia, maitake, mugwort, marshmallow, marjoram, mastic, massoi, catnip, matico, pine, matsuoji, mushroom, matsutake, matsubusa, poria, mate tea, bean, marigold, garden rhubarb, quince, mullein, mallow, mango, mangosteen, tangerine, chai chai hu, miso, mitsumata, bees wax, meat, mimoza, myoga, milk, myrtle, milfoil, myrrh, myrobalan, roasted barley, musk, gromwell, mesquite, meadowsweet, motherwort, maple, melissa, melilot, melon, sundew, cultured Moniliaceae solution, fir, peach, Jew's mallow, yakuchi, bayberry, eucalyptus, yukinoshita, yuzu, yucca, lily, leaf vegetables, yoroigusa, lionsfoot, litchi, life everlasting flower, lime, lilac, rakanka, long-leaved podocarp, raspberry, rhatany, radish, labdanum, lavender, lungwort, lungmoss, ramboutan, liqueur, leek, litsea, linaloe, longan, ryofunso, green tea, apple, linden, gentian, rue, borage, reseda, lemon, lemongrass, lian qiao, lotus, wax jambu, rosemary, lovage, bay, longose, horseradish, watafujiutsugi, wormwood, wormseed, bracken, burnet and the like.

The taste improver of the present invention can be used for foods and beverages for which the high intensity sweetener is used without any particular limitations. Examples of the foods and beverages include beverages such as coffee, tea, isotonic drink, and milk beverage; confectioneries such as candy, tablet candy, chewing gum, and snack foods; chilled sweets such as jelly and chilled dessert; dairy products; and the like.

### EXAMPLES

Hereinafter, the present invention will be described in detail in conjunction with Examples.

### Production Example 1 (Crude Spilanthol 1)

100 kg of 99 vol% ethanol was added to 10 kg of dried flower heads of Spilanthes acmella (crushed to about 5 mm), and extraction was carried out at 75 °C to reflux temperature for 5 hours. After cooling the extract solution to 40 °C, the extract solution was subjected to solid-liquid separation by a centrifugal separator, and then the extract solution was concentrated to 20 kg under reduced pressure. After adding 0.2 kg of active carbon to the concentrate and stirring for 1 hour, diatomaceous earth was added, pressure filtration was performed to remove the active carbon, and the filtrate was further concentrated under reduced pressure to obtain 0.43 kg of a Spilanthes acmella concentrate. Next, 2 kg of distilled water was added to the Spilanthes acmella concentrate and extraction was performed three times with 2 kg of ethyl acetate. The extracted ethyl acetate layers were collected, diatomaceous earth was added, pressure filtration was performed, and the filtrate was concentrated under reduced pressure to obtain 0.31 kg of a Spilanthes acmella crude extract. Yield: 3.1 %. Spilanthol content: 12.4 mass%. After mixing 100 g of the Spilanthes acmella crude extract and 100 g of fatty acid triglycerides, the mixture was distilled at a degree of vacuum of 3-5 Pa and a vaporization surface temperature of 110-150 °C by a reduced pressure thin-film distillation apparatus, to obtain 33.3 g of distillate. Yield: 33%. Spilanthol content: 38.0 mass%.

### Production Example 2 (Purified Spilanthol)

300 g of dried flower heads of Spilanthes acmella was refluxed and extracted for 1 hour with 3200 g of 95 vol % ethanol. The extract solution was cooled, the extract solution was subjected to solid-liquid separation, then diatomaceous earth was added to the extract solution and filtration was performed. The filtrate was concentrated under reduced pressure to remove the ethanol, and then 300 g of water was added and extraction was performed three times with 300 ml of hexane. The extracted hexane layers were collected and concentrated under reduced pressure for removal of the hexane to obtain 8.4 g of a crude extract. Yield: 2.8 % (spilanthol content: 9.5 mass%). The 8.4 g of the crude extract was fractionated (elution with n-hexane:ethyl acetate=8:2) by silica gel column chromatography (200 g of silica gel, Φ5 cm), and the spilanthol fraction (Rf value=0.2-0.3, n-hexane:ethyl acetate=7:3) was obtained and the solvent was distilled off under reduced pressure to obtain 2.76 g of a crude spilanthol fraction 1. The crude spilanthol fraction 1 was then subjected to simple distillation and purification (180 °C) using a Kugel-Rohr distilling apparatus under reduced pressure (0.1 mmHg) to obtain 0.98 g of a crude spilanthol fraction 2. Yield: 0.33% (spilanthol content: 41.9 mass%). The 0.98 g of the crude spilanthol fraction was further fractionated (elution with n-hexane:ethyl acetate=95:5-90:10) by silica gel column chromatography (200 g of silica gel, Φ5 cm), and then the spilanthol fraction (Rf value=0.2, n-hexane:ethyl acetate=7:3) was obtained and the solvent was distilled off under reduced pressure to obtain 0.52 g of purified spilanthol. Yield: 0.17%. Spilanthol content: 98 mass%. The spilanthol structure was confirmed by proton and carbon-13 NMR measurement in comparison with the known published data.

### [Production Example 3]

### <Quinic Acid-Containing Composition Derived from Green Coffee Beans>

After finely pulverizing 500 g of green coffee beans, 5000 ml of a 70 vol% ethanol aqueous solution was added, followed by heating to reflux for 2 hours. The liquid was cooled and then subjected to solid-liquid separation by a centrifugal separator , and the filtrate was concentrated under a reduced pressure to an ethanol content of 5 mass% or less, followed by adding 1000 units of chlorogenic acid esterase (manufactured by Kikkoman Corporation) and then stirring at 40°C for 3 hours. After removing insoluble matters by centrifugal separation, the treated liquid was allowed to pass through a column filled with 1000 ml of a synthetic adsorbent (manufactured by Mitsubishi Chemical Corporation; Diaion (registered trademark) HP-20), and the eluted liquid was freeze-dried to obtain 26.6 g of a quinic acid-containing composition derived from the green coffee beans (hereinafter referred to as "quinic acid (1"). One unit of chlorogenic acid esterase is an enzyme level which is capable of hydrolyzing one micromole of 5-caffeoylquinic acid in one minute in 30°C-water. In the obtained composition, 32 mass% of quinic acid was contained.

### [Production Example 4]

### <Quinic Acid-Containing Composition Derived from Tea Leaves>

Extraction was performed by adding 1000 g of distilled water to 100 g of tea leaves and leaving for 30 minutes at an ordinary temperature (15°C to 30°C). The extraction liquid was subjected to solid-liquid separation by using a centrifugal separator to obtain 900 g of a filtrate. Purification of the filtrate was performed by adding 30 g of active carbon to the filtrate and stirring for one hour. After that, the active carbon was removed, and 140 g of a concentrated liquid was obtained by concentration. Purification of the concentrated liquid was performed by passing the concentrated liquid through a column filled with 100 ml of a cation exchange resin (manufactured by Mitsubishi Chemical Corporation; Diaion (registered trademark) SK1B) at a space velocity SV of 2 (first re-purification). The passed liquid was concentrated to about 40 g, and 52.5 g of a 95 vol% ethanol and 2 g of active carbon were added thereto, followed by stirring, cooling, and filtration to eliminate insoluble matters (second re-purification). The obtained filtrate (78 g) was freeze-dried to obtain 4.7 g of a tea leaves extract (hereinafter referred to as "quinic acid (2) "). In the obtained composition, 16 mass% of quinic acid was contained.

### [Production Example 5]

### <Crude Vanilla Polyphenol>

To 10 g of ripen vanilla beans (from Madagascar) which were cut into about 3 mm-wide strips, 100 g of 99 vol% ethanol was added, and an aromatic component was eliminated by extracting for one hour with heating to reflux. After cooling to a room temperature, an extraction residue was obtained by a filter paper. 100 g of 50 vol% hydrous ethanol was added to the obtained extraction residue, and extraction was performed again for one hour with heating to reflux. After cooling to the room temperature, the solvent was distilled away under a reduced pressure from an extraction liquid obtained by eliminating an extraction slag by a filter paper, thereby obtaining 1.7 g of a vanilla polyphenol-containing composition (hereinafter referred to as "vanilla polyphenol (crude)").

### [Production Example 6]

### <Purified Vanilla Polyphenol>

To 10 g of ripen vanilla beans (from Madagascar) which were cut into about 3 mm-wide strips, 100 g of 99 vol% ethanol was added, and an aromatic component was eliminated by extracting for one hour with heating to reflux. After cooling to a room temperature, an extraction residue was obtained by a filter paper. 100 g of 50 vol% hydrous ethanol was added to the obtained extraction residue, and extraction was performed again for one hour with heating to reflux. After cooling to the room temperature, the crude vanilla polyphenol extract obtained by eliminating an extraction slag by a filter paper was concentrated to eliminate ethanol. Subsequently, the concentrated extract was allowed to pass through a column filled with a styrene-divinylbenzene-based industrial synthetic adsorbent resin (manufactured by Polymer Laboratories, Ltd.; RLRP-S Polymer Gel). Further, after eliminating sugars by passing distilled water, elution with a 50 vol% hydrous ethanol was performed to obtain a main polyphenol fraction. The obtained fraction was subjected to concentration under a reduced pressure by an evaporator to obtain a concentrated fraction, and the concentrated fraction was dried by a spray drier to obtain 1.1 g of a vanilla polyphenol powder preparation (hereinafter referred to as "vanilla polyphenol (purified)".

### [Production Example 7]

### <Crude Rosaceous Plant Polyphenol>

20 g of dried buds of Rosa rugosa were crushed, and 300 g of a 50 vol% hydrous ethanol was added thereto, followed by heating to reflux for 30 minutes for extraction. After eliminating insoluble matters by filtration, the filtrate was concentrated under a reduced pressure and then freeze-dried to obtain 1.7 g of a rosaceous plant polyphenol-containing composition (hereinafter referred to as "Rosa rugosa polyphenol (crude)").

### [Production Example 8]

### <Purified Rosaceous Plant Polyphenol>

20 g of dried buds of Rosa rugosa were crushed, and 300 g of a 50 vol% hydrous ethanol was added thereto, followed by heating to reflux for 30 minutes for extraction. After eliminating insoluble matters by filtration, the filtrate was concentrated under a reduced pressure and then freeze-dried to obtain 6,2 g of a powder product. 2.0 g of the powder was dissolved into water, filled into a synthetic resin adsorbent (manufactured by Mitsubishi Chemical Corporation; Diaion (registered trademark) SP-70), and then fractionated into 20 vol% ethanol aqueous solution elution fractions for purification, thereby obtaining 0.59 g of a rosaceous plant polyphenol-containing composition (hereinafter referred to as Rosa rugosa polyphenol (purified.)").

By using the spilanthol (crude), spilanthol (purified), quinic acid (1), quinic acid (2), vanilla polyphenol (crude), vanilla polyphenol (purified), Rosa rugosa polyphenol (crude), and Rosa rugosa polyphenol (purified) obtained by Production Examples 1 to 8 and commercially available "Polyphenon" (registered trademark) manufactured by Tokyo Food Techno Co., Ltd. as green tea polyphenol, taste improvers shown in Table 1 were produced. Each of the numbers in Table 1 represents an extract solid content in the case where 0.1 mass% of the taste improver was added to a beverage or food which is the end product. By using the taste improvers, taste improving effects with respect to high intensity sweeteners or high intensity sweetener-containing beverages or foods were investigated. In the following test examples, scoring criteria for sensory evaluation were as shown in Table 2.

**(Table 1: Taste Improvers)**

| [Comparative Example 1] | |
|---|---|
| Spilanthol(crude) | : 0.15 ppm |
| Quinic acid (1) | : 5 ppm |

| [Comparative Example 2] | |
|---|---|
| Spilanthol (purified) | : 0.15 ppm |
| Quinic acid (1) | : 5 ppm |

| [Example 1] | |
|---|---|
| Spilanthol(crude) | : 0.15 ppm |
| Quinic acid (1) | : 5 ppm |
| Vanilla polyphenol(crude) | : 150 ppm |

| [Example 2] | |
|---|---|
| Spilanthol(purified) | : 0.15 ppm |
| Quinic acid (1) | : 5 ppm |
| Vanilla polyphenol(crude) | : 150 ppm |

| [Example 3] | |
|---|---|
| Spilanthol(crude) | : 0.15 ppm |
| Quinic acid (1) | : 5 ppm |
| Vanilla polyphenol(purified) | : 150 ppm |

| [Example 4] | |
|---|---|
| Spilanthol(purified) | : 0.15 ppm |
| Quinic acid (1) | : 5 ppm |
| Vanilla polyphenol(purified) | : 150 ppm |

| [Example 5] | |
|---|---|
| Spilanthol(purified) | : 0.15 ppm |
| Quinic acid (2) | : 5 ppm |
| Vanilla polyphenol(purified) | : 150 ppm |

| [Example 6] | |
|---|---|
| Spilanthol(purified) | : 0.15 ppm |
| Quinic acid (1) | : 5 ppm |
| Vanilla polyphenol(purified) | : 150 ppm |
| Green tea polyphenol | : 100 ppm |

| [Example 7] | |
|---|---|
| Spilanthol(purified) | : 0.15 ppm |
| Quinic acid (2) | : 5 ppm |
| Vanilla polyphenol(purified) | : 150 ppm |
| Green tea polyphenol | : 100 ppm |

| [Example 8] | |
|---|---|
| Spilanthol(purified) | : 0.15 ppm |
| Quinic acid (1) | : 5 ppm |
| Vanilla polyphenol(purified) | : 150 ppm |
| Rosa rugosa polyphenol(crude) | : 20 ppm |

| [Example 9] | |
|---|---|
| Spilanthol(purified) | : 0.15 ppm |
| Quinic acid (2) | : 5 ppm |
| Vanilla polyphenol(purified) | : 150 ppm |
| Rosa rugosa polyphenol(purified) | : 20 ppm |

| [Example 10] | |
|---|---|
| Spilanthol(purified) | : 0.15 ppm |
| Quinic acid (2) | : 5 ppm |
| Vanilla polyphenol(crude) | : 150 ppm |
| Green tea polyphenol | : 100 ppm |
| Rosa rugosa polyphenol(crude) | : 20 ppm |

| [Example 11] | |
|---|---|
| Spilanthol(purified) | : 0.15 ppm |
| Quinic acid (1) | : 5 ppm |
| Vanilla polyphenol(purified) | : 150 ppm |
| Green tea polyphenol | : 100 ppm |
| Rosa rugosa polyphenol(purified) | : 20 ppm |

| [Example 12] | |
|---|---|
| Spilanthol(purified) | : 0.15 ppm |
| Quinic acid (2) | : 5 ppm |
| Vanilla polyphenol(purified) | : 150 ppm |
| Green tea polyphenol | : 100 ppm |
| Rosa rugosa polyphenol(purified) | : 20 ppm |

**(Table 2: Criteria for Evaluation)**

| | | |
|---|---|---|
| +++ | : | Remarkably effective (8 or more out of 10 well-seasoned panelists recognized the effect as compared to control) |
| ++ | : | Effective (5 or more out of 10 well-seasoned panelists recognized the effect as compared to control) |
| + | : | Moderately effective (3 or more out of 10 well-seasoned panelists recognized the effect as compared to control) |
| - | : | No effect/change(less than 3 out of 10 well-seasoned panelists recognized the effect as compared to control) |

**(Formulation 1)**

| Product name | Added amount (g) |
|---|---|
| Aspartame | 0.6 |
| Citric acid | 1.0 |
| Water | residual |
| Total | 1000.0 |
| pH: 2.7 | |
| Sterilization conditions: 70°C × 10 minutes | |

**(Table 3)**

| Evaluation sample | Sweetness similar to sucrose | Top impact | Suppression of lingering sweetness |
|---|---|---|---|
| Comparative example 1 | - | - | ++ |
| Comparative example 2 | - | - | ++ |
| Examples 1 | + | ++ | ++ |
| Example 2 | + | ++ | ++ |
| Example 3 | ++ | + | ++ |
| Example 4 | ++ | + | ++ |
| Example 5 | ++ | + | ++ |
| Example 6 | ++ | + | ++ |
| Example 7 | ++ | + | ++ |
| Example 8 | ++ | + | ++ |
| Example 9 | ++ | + | ++ |
| Example 10 | + | ++ | +++ |
| Example 11 | ++ | + | +++ |
| Example 12 | ++ | + | +++ |

As is apparent from Table 3, the taste improving effect was attained by adding each of the taste improvers to the aspartame solution. More specifically, taste intensity which is equal to that attained by using sugars such as sucrose was reproduced as compared to Comparative Examples. Further, by using a plurality of polyphenols, the improving effect was more enhanced.

### [Test Example 2]

### Effect on Sucralose

0.1 mass% of each of the taste improvers of Comparative Example 2, Examples 1, 3, 6, 9, 10, and 12 was added to the sucralose solution of Formulation 2, and sensory evaluation by well-seasoned 10 panelists was conducted by using a taste improver-free product as a control and based on the scoring criteria of Table 2. The results are shown in Table 4.

**(Formulation 2)**

| Product name | Added amount (g) |
|---|---|
| Sucralose | 0.2 |
| Citric acid | 0.5 |
| Water | residual |
| Total | 1000.0 |
| pH: 2.6 | |
| Sterilization conditions: 70°C × 10 minutes | |

**(Table 4)**

| Evaluation sample | Sweetness similar to sucrose | Top impact | Suppression of lingering sweetness |
|---|---|---|---|
| Comparative example 2 | - | - | ++ |
| Example 1 | + | ++ | + |
| Example 3 | ++ | + | ++ |
| Example 6 | ++ | + | ++ |
| Example 9 | ++ | + | ++ |
| Example 10 | + | ++ | +++ |
| Example 12 | ++ | + | +++ |

As is apparent from Table 4, the taste improving effect was attained by adding each of the taste improvers to the sucralose solution. More specifically, taste intensity which is equal to that attained by using sugars such as sucrose was reproduced as compared to Comparative Examples. Further, by using a plurality of polyphenols, the improving effect was more enhanced.

### [Test Example 3]

### Effect on Stevia

0.1 mass% of each of the taste improvers of Comparative Example 1, Examples 1 to 12 was added to the stevia solution of Formulation 3, and sensory evaluation by well-seasoned 10 panelists was conducted by using a taste improver-free product as a control and based on the scoring criteria of Table 2. The results are shown in Table 5.

**(Formulation 3)**

| Product name | Added amount (g) |
|---|---|
| Stevia | 0.5 |
| Citric acid | 0.5 |
| Water | residual |
| Total | 1000.0 |
| pH: 2.6 | |
| Sterilization conditions: 70°C × 10 minutes | |

**(Table 5)**

| Evaluation sample | Sweetness similar to sucrose | Top impact | Suppression of lingering sweetness |
|---|---|---|---|
| Comparative example 1 | - | - | ++ |
| Example 1 | + | ++ | ++ |
| Example 2 | + | ++ | ++ |
| Example 3 | ++ | + | ++ |
| Example 4 | ++ | + | ++ |
| Example 5 | ++ | + | ++ |
| Example 6 | ++ | + | ++ |
| Example 7 | ++ | + | ++ |
| Example 8 | ++ | + | ++ |
| Example 9 | ++ | + | ++ |
| Example 10 | + | ++ | +++ |
| Example 11 | ++ | + | +++ |
| Example 12 | ++ | + | +++ |

As is apparent from Table 5, the taste improving effect was attained by adding each of the taste improvers to the stevia solution. More specifically, taste intensity which is equal to that attained by using sugars such as sucrose was reproduced as compared to Comparative Examples. Further, by using a plurality of polyphenols, the improving effect was more enhanced.

### [Test Example 4]

### Effect on Acesulfame K

Q . 1 mass% of each of the taste improvers of Comparative Example 1, Examples 2, 4, 5, 7, 8, 9, 10 and 11 was added to the acesulfame K solution of Formulation 4, and sensory evaluation by well-seasoned 10 panelists was conducted by using a taste improver-free product as a control and based on the scoring criteria of Table 2. The results are shown in Table 6.

**(Formulation 4)**

| Product name | Added amount (g) |
|---|---|
| Acesulfame K | 0.40 |
| Citric acid | 0.05 |
| Water | residual |
| Total | 1000.00 |
| pH: 2.9 | |
| Sterilization conditions: 70°C × 10 minutes | |

**(Table 6)**

| Evaluation sample | Sweetness similar to sucrose | Top impact | Suppression of lingering sweetness |
|---|---|---|---|
| Comparative example 1 | - | - | ++ |
| Example 2 | + | + | ++ |
| Example 4 | + | + | ++ |
| Example 5 | + | + | ++ |
| Example 7 | + | + | ++ |
| Example 8 | ++ | + | ++ |
| Example 9 | ++ | + | ++ |
| Example 10 | + | ++ | +++ |
| Example 11 | ++ | + | +++ |

As is apparent from Table 6, the taste improving effect was attained by adding each of the taste improvers to the acesulfame K solution. More specifically, taste intensity which is equal to that attained by using sugars such as sucrose was reproduced as compared to Comparative Examples. Further, by using a plurality of polyphenols, the improving effect was more enhanced.

### [Test Example 5]

### Functional beverage containing aspartame

0.1 mass% of each of the taste improvers of Comparative Example 2, Examples 1, 3, 6, 9, 10 and 12 was added to the functional beverage of Formulation 5, and sensory evaluation by well-seasoned 10 panelists was conducted by using a taste improver-free product as a control and based on the scoring criteria of Table 2. The results are shown in Table 7.

**(Formulation 5)**

| Product name | Added amount (g) |
|---|---|
| Aspartame | 0.240 |
| Citric acid | 2.000 |
| Sodium citrate | 0.800 |
| Arginine | 0.300 |
| Laminaria extract | 0.180 |
| Sodium chloride | 0.150 |
| Calcium lactate | 0.100 |
| Vitamin C | 0.050 |
| Niacin | 0.010 |
| Calcium pantothenate | 0.005 |
| Vitamin B6 | 0.002 |
| Grapefruit flavoring | 0.015 |
| (manufactured by Ogawa & Co., Ltd.) | |
| Water | residual |
| Total | 1000.000 |
| Brix: 0.35 | |
| pH: 3.4 | |
| Sterilization conditions: 70°C × 10 minutes | |

**(Table 7)**

| Evaluation sample | Sweetness similar to sucrose | Citrus flavor of top | Middle volume | Suppression of lingering sweetness |
|---|---|---|---|---|
| Comparative example 2 | - | - | - | ++ |
| Example 1 | + | ++ | + | + |
| Example 3 | ++ | + | + | ++ |
| Example 6 | ++ | + | ++ | ++ |
| Example 9 | ++ | + | ++ | ++ |
| Example 10 | + | ++ | ++ | +++ |
| Example 12 | ++ | + | ++ | +++ |

As is apparent from Table 7, the taste improving effect was attained by adding each of the taste improvers to the functional beverage containing aspartame. More specifically, taste intensity and a flavor profile which are equal to those attained by using sugars such as sucrose were reproduced as compared to Comparative Example. Further, by using a plurality of polyphenols, the improving effect was more enhanced.

### [Test Example 6]

### Functional beverage containing stevia

0.1 mass% of each of the taste improvers of Comparative Examples 1 and 2, Examples 1 to 12 was added to the functional beverage of Formulation 6, and sensory evaluation by well-seasoned 10 panelists was conducted by using a taste improver-free product as a control and based on the scoring criteria of Table 2. The results are shown in Table 8.

**(Formulation 6)**

| Product name | Added amount (g) |
|---|---|
| Stevia | 0.240 |
| Citric acid | 2.000 |
| Sodium citrate | 0.800 |
| Arginine | 0.300 |
| Laminaria extract | 0.180 |
| Sodium chloride | 0.150 |
| Calcium lactate | 0.100 |
| Vitamin C | 0.050 |
| Niacin | 0.010 |
| Calcium pantothenate | 0.005 |
| Vitamin B6 | 0.002 |
| Grapefruit flavoring | 0.015 |
| (manufactured by Ogawa & Co., Ltd.) | |
| Water | residual |
| Total | 1000.000 |
| Brix: 0.33 | |
| pH: 3.4 | |
| Sterilization conditions: 70°C × 10 minutes | |

**(Table 8)**

| Evaluation sample | Sweetness similar to sucrose | Citrus flavor of top | Middle volume | Suppression of lingering sweetness |
|---|---|---|---|---|
| Comparative example 1 | - | - | - | ++ |
| [Comparative example 2 | - | - | - | ++ |
| Example 1 | + | ++ | + | + |
| Example 2 | + | ++ | + | + |
| Example 3 | ++ | + | + | ++ |
| Example 4 | ++ | + | + | ++ |
| Example 5 | ++ | + | + | ++ |
| Example 6 | ++ | + | ++ | ++ |
| Example 7 | ++ | + | ++ | ++ |
| Example 8 | ++ | + | ++ | ++ |
| Example 9 | ++ | + | ++ | ++ |
| Example 10 | + | ++ | ++ | +++ |
| Example 11 | ++ | + | ++ | +++ |
| Example 12 | ++ | + | ++ | +++ |

As is apparent from Table 8, the taste improving effect was attained by adding each of the taste improvers to the functional beverage containing stevia. More specifically, taste intensity and a flavor profile which are equal to those attained by using sugars such as sucrose were reproduced as compared to Comparative Example. Further, by using a plurality of polyphenols, the improving effect was more enhanced.

### [Test Example 7]

### Functional beverage containing sucralose

0.1 mass% of each of the taste improvers of Comparative Example 1, Examples 2, 4, 5, 7, 8, 9, 10 and 11 was added to the functional beverage of Formulation 7, and sensory evaluation by well-seasoned 10 panelists was conducted by using a taste improver-free product as a control and based on the scoring criteria of Table 2. The results are shown in Table 9.

**(Formulation 7)**

| Product name | Added amount (g) |
|---|---|
| sucralose | 0.080 |
| Citric acid | 2.000 |
| Sodium citrate | 0.800 |
| Arginine | 0.300 |
| Laminaria extract | 0.180 |
| Sodium chloride | 0.150 |
| Calcium lactate | 0.100 |
| Vitamin C | 0.050 |
| Niacin | 0.010 |
| Calcium pantothenate | 0.005 |
| Vitamin B6 | 0.002 |
| Grapefruit flavoring | 0.015 |
| (manufactured by Ogawa & Co., Ltd.) | |
| Water | residual |
| Total | 1000.000 |
| Brix: 0.33 | |
| pH: 3.4 | |
| Sterilization conditions: 70°C × 10 minutes | |

**(Table 9)**

| Evaluation sample | Sweetness similar to sucrose | Citrus flavor of top | Middle volume | Suppression of lingering sweetness |
|---|---|---|---|---|
| Comparative example 1 | - | - | - | ++ |
| Example 2 | + | + | + | + |
| Example 4 | + | + | + | ++ |
| Example 5 | + | + | + | ++ |
| Example 7 | + | + | ++ | ++ |
| Example 8 | ++ | + | ++ | ++ |
| Example 9 | ++ | + | ++ | ++ |
| Example 10 | + | ++ | ++ | +++ |
| Example 11 | ++ | + | ++ | +++ |

As is apparent from Table 9, the taste improving effect was attained by adding each of the taste improvers to the functional beverage containing sucralose. More specifically, taste intensity and a flavor profile which are equal to those attained by using sugars such as sucrose were reproduced as compared to Comparative Example. Further, by using a plurality of polyphenols, the improving effect was more enhanced.

### [Test Example 8]

### Carbonated beverage containing stevia

0.1 mass% of each of the taste improvers of Comparative Example 2, Examples 1, 3, 6, 9, 10 and 12 was added to the carbonated beverage of Formulation 8, and sensory evaluation by well-seasoned 10 panelists was conducted by using a taste improver-free product as a control and based on the scoring criteria of Table 2. The results are shown in Table 10.

**(Formulation 8)**

| Product name | Added amount (g) |
|---|---|
| Phosphoric acid | 1.00 |
| Stevia | 0.45 |
| Citric acid | 0.60 |
| Caffeine | 0.10 |
| Caramel | 2.70 |
| Cola flavoring | 1.00 |
| (manufactured by Ogawa & Co., Ltd.) | |
| Carbonated water | 850.00 |
| Water | residual |
| Total | 1000.00 |
| Brix: 0.50 | |
| pH: 2.8 | |
| Sterilization conditions: no sterilization | |

**(Table 10)**

| Evaluation sample | Sweetness similar to sucrose | Top impact | Middle volume | Suppression of lingering sweetness |
|---|---|---|---|---|
| Comparative example 2 | - | - | - | +++ |
| Example 1 | + | ++ | + | +++ |
| Example 3 | ++ | + | + | ++ |
| Example 6 | ++ | + | ++ | +++ |
| Example 9 | ++ | + | ++ | +++ |
| Example 10 | + | ++ | ++ | +++ |
| Example 12 | ++ | + | ++ | +++ |

As is apparent from Table 10, the taste improving effect was attained by adding each of the taste improvers to the functional beverage containing stevia. More specifically, taste intensity which is equal to that attained by using sugars such as sucrose was reproduced as compared to Comparative Examples. Further, by using a plurality of polyphenols, the improving effect was more enhanced.

### [Test Example 9]

### Fruit juice containing sucralose and acesulfame K

0.1 mass% of each of the taste improvers of Comparative Example 1, Examples 2, 4, 5, 7, 8, 9, 10 and 11 was added to the fruit juice of Formulation 9, and sensory evaluation by well-seasoned 10 panelists was conducted by using a taste improver-free product as a control and based on the scoring criteria of Table 2. The results are shown in Table 11.

**(Formulation 9)**

| Product name | Added amount (g) |
|---|---|
| Orange juice concentrate | 40.00 |
| Fructose dextroglucose | |
| liquid sugar | 100.00 |
| Citric acid | 0.80 |
| Sucralose | 0.07 |
| Acesulfame K | 0.20 |
| Orange flavoring | 1.00 |
| (manufactured by Ogawa & Co., Ltd.) | |
| Water | residual |
| Total | 1000.00 |
| Brix:2.69 | |
| pH: 3.6 | |
| Sterilization conditions: 70°C × 10 minutes | |

**(Table 11)**

| Evaluation sample | Sweetness similar to sucrose | Top impact | Fruit juice flavor of middle | Suppression of lingering sweetness |
|---|---|---|---|---|
| Comparative example 1 | - | - | - | ++ |
| Example 2 | + | + | + | + |
| Example 4 | + | + | + | ++ |
| Example 5 | + | + | + | ++ |
| Example 7 | + | + | ++ | ++ |
| Example 8 | ++ | + | ++ | ++ |
| Example 9 | ++ | + | ++ | ++ |
| Example 10 | + | ++ | ++ | +++ |
| Example 11 | ++ | + | ++ | +++ |

As is apparent from Table 11, the taste improving effect was attained by adding each of the taste improvers to the fruit juice containing sucralose and acesulfame K. More specifically, taste intensity and a flavor profile which are equal to those attained by using sugars such as sucrose were reproduced as compared to Comparative Example. Further, by using a plurality of polyphenols, the improving effect was more enhanced.

### [Test Example 10]

### Fruit juice containing stevia

0.1 mass% of each of the taste improvers of Comparative Example 2, Examples 1, 3, 6, 9, 10 and 12 was added to the fruit juice of Formulation 10, and sensory evaluation by well-seasoned 10 panelists was conducted by using a taste improver-free product as a control and based on the scoring criteria of Table 2. The results are shown in Table 12.

**(Formulation 10)**

| Product name | Added amount (g) |
|---|---|
| Orange juice concentrate | 40.00 |
| Fructose dextroglucose | |
| liquid sugar | 100.00 |
| Citric acid | 0.80 |
| Stevia | 0.40 |
| Orange flavoring | 1.00 |
| (manufactured by Ogawa & Co., Ltd.) | |
| Water | residual |
| Total | 1000.00 |
| Brix:2.69 | |
| pH: 3. 6 | |
| Sterilization conditions: 70°C × 10 minutes | |

**(Table 12)**

| Evaluation sample | Sweetness similar to sucrose | Top impact | Fruit juice flavor of middle | Suppression of lingering sweetness |
|---|---|---|---|---|
| Comparative example 2 | - | - | - | ++ |
| Example 1 | + | ++ | + | ++ |
| Example 3 | ++ | + | + | ++ |
| Example 6 | ++ | + | ++ | +++ |
| Example 9 | ++ | + | ++ | +++ |
| Example 10 | + | ++ | +++ | +++ |
| Example 12 | ++ | + | +++ | +++ |

As is apparent from Table 12, the taste improving effect was attained by adding each of the taste improvers to the fruit juice containing stevia. More specifically, taste intensity and a flavor profile which are equal to those attained by using sugars such as sucrose were reproduced as compared to Comparative Example. Further, by using a plurality of polyphenols, the improving effect was more enhanced.

### [Test Example 11]

### Coffee beverage containing sucralose and acesulfame K

0.2 mass% of each of the taste improvers of Comparative Example 1, Examples 1, 3, 6, 9, 10 and 12 was added to the coffee beverage of Formulation 11, and sensory evaluation by well-seasoned 10 panelists was conducted by using a taste improver-free product as a control and based on the scoring criteria of Table 2. The results are shown in Table 13.

**(Formulation 11)**

| Product name | Added amount (g) |
|---|---|
| Milk | 220.00 |
| Coffee beans | 61.00 |
| Sucralose | 0.03 |
| Acesulfame K | 0.18 |
| Sucralose fatty acid ester | 0.30 |
| Baking soda | proper quantity |
| Water | residual |
| Total | 1000.00 |
| Brix:4.60 | |
| pH: 6.8 | |
| Sterilization conditions: 123°C x 20 minutes | |

**(Table 13)**

| Evaluation sample | Sweetness similar to sucrose | Coffee flavor of top | Milk flavor of middle | Suppression of lingering sweetness |
|---|---|---|---|---|
| Comparative example I | - | + | - | ++ |
| Example 1 | + | ++ | - | ++ |
| Example 3 | + | + | + | ++ |
| Example 6 | + | + | ++ | +++ |
| Example 9 | ++ | + | ++ | +++ |
| Example 10 | + | +++ | ++ | +++ |
| Example 12 | ++ | ++ | ++ | +++ |

As is apparent from Table 13, the taste improving effect was attained by adding each of the taste improvers to the coffee beverage containing sucralose and acesulfame K. More specifically, taste intensity and a flavor profile which are equal to those attained by using sugars such as sucrose were reproduced as compared to Comparative Example. Further, by using a plurality of polyphenols, the improving effect was more enhanced.

### [Test Example 12]

### Coffee beverage containing stevia

0.2 mass% of each of the taste improvers of Comparative Example 1, Examples 1, 3, 6, 9, 10 and 12 was added to the coffee beverage of Formulation 12, and sensory evaluation by well-seasoned 10 panelists was conducted by using a taste improver-free product as a control and based on the scoring criteria of Table 2. The results are shown in Table 14.

**(Formulation 12)**

| Product name | Added amount (g) |
|---|---|
| Milk | 220.00 |
| Coffee beans | 61.00 |
| Stevia | 0.26 |
| Sucralose fatty acid ester | 0.30 |
| Baking soda | proper quantity |
| Water | residual |
| Total | 1000.00 |
| Brix:4.61 | |
| pH: 6.8 | |
| Sterilization conditions: 123°C x 20 minutes | |

**(Table 14)**

| Evaluation sample | Sweetness similar to sucrose | Coffee flavor of top | Milk flavor of middle | Suppression of lingering sweetness |
|---|---|---|---|---|
| Comparative example 1 | - | - | + | ++ |
| Example 1 | + | ++ | + | ++ |
| Example 3 | ++ | + | + | ++ |
| Example 6 | ++ | + | ++ | +++ |
| Example 9 | ++ | + | ++ | +++ |
| Example 10 | + | +++ | +++ | +++ |
| Example 12 | ++ | ++ | +++ | +++ |

As is apparent from Table 14, the taste improving effect was attained by adding each of the taste improvers to the coffee beverage containing stevia. More specifically, taste intensity and a flavor profile which are equal to those attained by using sugars such as sucrose were reproduced as compared to Comparative Example. Further, by using a plurality of polyphenols, the improving effect was more enhanced.

### [Test Example 13]

### Stevia-Containing Potato Chips

After completely dissolving 2 g of each of the taste improvers of Comparative Example 1 and Production Examples 1, 5, 6, 9, 10, and 12 to 10 g of water, 20 g of modified starch and 70 g of dextrin were added to 150 g of water for emulsification. The emulsion was spray-dried to obtain a taste improver powder. 1.5 g of the powder was mixed uniformly with 100 g of dextrin to obtain a taste improver mixed powder. The powder was dispersed onto surfaces of the potato chips of Formulation 13 in such a manner that a spilanthol content was 0.3 ppm, quinic acid was 10 ppm, a vanilla polyphenol-containing extract solid content was 200 ppm, a green tea polyphenol-containing extract solid content was 100 ppm, and a Rosa rugosa polyphenol-containing extract solid content was 40 ppm. Sensory evaluation of the potato chips by well-seasoned 10 panelists was conducted by using a taste improver-free product as a control and based on the scoring criteria of Table 2. The results are shown in Table 15.

### (Formulation 13)

1. Potatoes were sliced.
2. The potatoes were immersed in water for 30 minutes.
3. After wiping off the water well, the potatoes underwent circulation drying at 40°C for 20 minutes.
4. The potatoes were fried at 140°C for 3 minutes.
5. A barbeque seasoning (manufactured by Ogawa & Co., Ltd.) using stevia was dispersed onto surfaces of the potato chips.

**(Table 15)**

| Evaluation sample | Barbeque flavor | Middle volume | Tastiness | Suppression of lingering sweetness |
|---|---|---|---|---|
| Comparative example 1 | - | - | - | ++ |
| Example 1 | + | ++ | + | ++ |
| Example 5 | ++ | ++ | + | ++ |
| Example 6 | ++ | ++ | ++ | +++ |
| Example 9 | ++ | ++ | ++ | +++ |
| Example 10 | ++ | +++ | ++ | +++ |
| Example 12 | +++ | +++ | +++ | +++ |

As is apparent from Table 15, it was confirmed that the taste improving effects were attained by adding each of the taste improvers to the potato chips obtained by using stevia. More specifically, taste intensity and a flavor profile which are equal to those attained by using sugars such as sucrose were reproduced as compared to Comparative Example. Further, by using a plurality of polyphenols, the improving effect was more enhanced.

### [Test Example 14]

### Stevia Composition

After completely dissolving 10 kg of stevia into 500 kg of water, 5 kg of the taste improver obtained in Example 12 was added to the solution to prepare an aqueous sweetener solution containing spilanthol, quinic acid, vanilla polyphenol, green tea polyphenol, and Rosa rugosa polyphenol. The aqueous solution was spray-dried at an inlet temperature of 120°C and an outlet temperature of 80°C to obtain 10 kg of a sweetener powder (product of present invention 1). The powder was dissolved into water so that a stevia concentration became 0.5 mass%, and taste evaluation by well-seasoned 10 panelists was conducted by using a taste improver-free solution as a control. As a result, more than half of the panelists confirmed that the product of the present invention 1 was reduced in bitter taste and harsh taste peculiar to stevia as compared to the control and recognized the taste improving effects of the present invention.

### [Test Example 15]

### Sucralose Composition

After completely dissolving 10 kg of sucralose into 500 kg of water, 3 kg of the taste improver obtained in Example 12 was added to the solution to prepare an aqueous sweetener solution containing spilanthol, quinic acid, vanilla polyphenol, green tea polyphenol, and Rosa rugosa polyphenol. The aqueous solution was spray-dried at an inlet temperature of 120°C and an outlet temperature of 80°C to obtain 10 kg of a sweetener powder (product of present invention 2). The powder was dissolved into water so that a sucralose concentration became 0.1 mass%, and taste evaluation by well-seasoned 10 panelists was conducted by using a taste improver-free solution as a control. As a result, more than half of the panelists perceived that the product of the present invention 2 was reduced in lingering sweetness and bitter taste peculiar to sucralose as compared to the control and recognized the taste improving effects of the present invention.

### [Test Example 16]

### Acesulfame K Composition

After completely dissolving 10 kg of acesulfame K into 500 kg of water, 6 kg of the taste improver obtained in Example 12 was added to the solution to prepare an aqueous sweetener solution containing spilanthol, quinic acid, vanilla polyphenol, green tea polyphenol, and Rosa rugosa polyphenol. The aqueous solution was spray-dried at an inlet temperature of 120°C and an outlet temperature of 80°C to obtain 10 kg of a sweetener powder (product of present invention 3). The powder was dissolved into water so that an acesulfame K concentration became 0.4 mass%, and taste evaluation by well-seasoned 10 panelists was conducted by using a taste improver-free solution as a control. As a result, more than half of the panelists perceived that the product of the present invention 3 was reduced in bitterness and acrid taste peculiar to acesulfame K as compared to the control and recognized the taste improving effects of the present invention.

### INDUSTRIAL APPLICABILITY

By adding the taste improver of the present invention to a beverage or food containing a high intensity sweetener or by adding a high intensity sweetener composition containing the taste improver of the present invention to a beverage or food, it is possible to reduce unpleasant aftertastes peculiar to the high intensity sweetener as well as to reproduce taste intensity and a flavor profile which are equal to those attained by using sucrose or the like. Since a small added amount of the taste improver of the present invention attains the effects, it is possible to improve the unpleasant aftertastes and the like of the high intensity sweetener without influencing on an original flavor of the beverage or food.

## Claims

1. A taste improver for high intensity sweetener, comprising the following (A), (B), and (C):
(A) spilanthol, or an extract or essential oil of a plant containing spilanthol,
(B) quinic acid or a composition containing quinic acid, and
(C) a composition containing polyphenol obtained by subjecting a vanilla bean residue after removal of an aromatic component to extraction with a hydrous organic solvent.

2. The taste improver for high intensity sweetener according to claim 1, further comprising at least one of the following (D) and (E):
(D) green tea polyphenol or a composition containing green tea polyphenol, and
(E) rosaceous plant polyphenol or a composition containing rosaceous plant polyphenol.

3. The taste improver for high intensity sweetener according to claim 1, wherein the plant containing spilanthol is Spilanthes acmella or Spilanthes acmella var. oleracea.

4. The taste improver for high intensity sweetener according to claim 1, wherein the composition containing quinic acid includes a coffee bean hydrolysate containing a quinic acid derivative obtained by purifying a hydrolysis product after subjecting a coffee bean extract to hydrolysis.

5. The taste improver for high intensity sweetener according to claim 1, wherein the composition containing quinic acid includes a purified matter obtained by obtaining an extraction liquid by subjecting tea leaves to extraction with water and then subjecting the extraction liquid to purification with an adsorbent.

6. The taste improver for high intensity sweetener according to claim 1, wherein the composition containing polyphenol includes a purified matter obtained by obtaining an extraction liquid by subjecting a vanilla bean residue after removal of an aromatic component to extraction with a hydrous organic solvent and then subjecting the extraction liquid to purification with an adsorbent.

7. The taste improver for high intensity sweetener according to claim 2, wherein the composition containing rosaceous plant polyphenol includes an extract obtained by subjecting a rosaceous plant to extraction with water and/or a polar organic solvent.

8. The taste improver for high intensity sweetener according to claim 1, wherein the high intensity sweetener is aspartame, sucralose, acesulfame-K, stevia, or neotame.

9. A method of improving a taste of a high intensity sweetener, comprising adding the taste improver for high intensity sweetener according to claim 1 or 2 to the high intensity sweetener or a beverage or food containing the high intensity sweetener.

10. A flavoring composition for high intensity sweetener-containing beverage or food, **characterized by** containing the taste improver for high intensity sweetener according to claim 1 or 2 combined with any other desired flavoring components.

11. A high intensity sweetener composition, a beverage or food **characterized by** containing a high intensity sweetener and the taste improver for high intensity sweetener according to claim 1 or 2.

## Patentansprüche

1. Geschmacksverstärker für Süßstoff mit hoher Süßkraft, umfassend die nachfolgenden Komponenten (A), (B) und (C):
(A) Spilanthol, oder einen Extrakt oder ein ätherisches Öl einer Spilanthol enthaltenden Pflanze,
(B) Chinasäure, oder eine Chinasäure enthaltende Zusammensetzung, und
(C) eine Polyphenol enthaltende Zusammensetzung, welche durch Extrahieren eines von einer aromatischen Komponente befreiten Vanillebohnenrückstands mit einem wässrigen organischen Lösungsmittel erhalten worden ist.

2. Geschmacksverstärker für Süßstoff mit hoher Süßkraft nach Anspruch 1, weiterhin umfassend zumindest eine der nachfolgenden Komponenten (D) und (E):
(D) Grünteepolyphenol, oder eine Grünteepolyphenol enthaltende Zusammensetzung, und
(E) Rosenpflanzenpolyphenol, oder eine Rosenpflanzenpolyphenol enthaltende Zusammensetzung.

3. Geschmacksverstärker für Süßstoff mit hoher Süßkraft nach Anspruch 1, wobei es sich bei der Spilanthol enthaltenden Pflanze um Spilanthes acmella oder um Spilanthes acmella var. oleracea handelt.

4. Geschmacksverstärker für Süßstoff mit hoher Süßkraft nach Anspruch 1, wobei die Chinasäure enthaltende Zusammensetzung ein ein Chinasäurederivat enthaltendes Kaffeebohnenhydrolysat umfasst, welches durch Hydrolysieren eines Kaffeebohnenextrakts und anschließendes Reinigen eines Hydrolyseprodukts erhalten worden ist.

5. Geschmacksverstärker für Süßstoff mit hoher Süßkraft nach Anspruch 1, wobei die Chinasäure enthaltende Zusammensetzung ein gereinigtes Material umfasst, welches durch Bereitstellen eines durch Extrahieren von Teeblättern mit Wasser erhaltenen flüssigen Extrakts sowie anschließendes Reinigen des flüssigen Extrakts mit einem Adsorptionsmittel erhalten worden ist.

6. Geschmacksverstärker für Süßstoff mit hoher Süßkraft nach Anspruch 1, wobei die Polyphenol enthaltende Zusammensetzung ein gereinigtes Material umfasst, welches durch Bereitstellen eines durch Extrahieren eines von einer aromatischen Komponente befreiten Vanillebohnenrückstands mit einem wässrigen organischen Lösungsmittel erhaltenen flüssigen Extrakts sowie anschließendes Reinigen des flüssigen Extrakts mit einem Adsorptionsmittel erhalten worden ist.

7. Geschmacksverstärker für Süßstoff mit hoher Süßkraft nach Anspruch 2, wobei die Rosenpflanzenpolyphenol enthaltende Zusammensetzung einen Extrakt umfasst, welcher durch Extrahieren einer Rosenpflanze mit Wasser und/oder einem polaren organischen Lösungsmittel erhalten worden ist.

8. Geschmacksverstärker für Süßstoff mit hoher Süßkraft nach Anspruch 1, wobei es sich bei dem Süßstoff mit hoher Süßkraft um Aspartam, Sucralose, Acesulfam-K, Stevia oder Neotam handelt.

9. Verfahren zur Verstärkung des Geschmacks eines Süßstoffes mit hoher Süßkraft, umfassend das Hinzufügen des Geschmacksverstärkers für Süßstoff mit hoher Süßkraft nach Anspruch 1 oder 2 zu dem Süßstoff mit hoher Süßkraft oder zu einem den Süßstoff mit hoher Süßkraft enthaltenden Getränk oder Nahrungsmittel.

10. Aromazusammensetzung für ein einen Süßstoff mit hoher Süßkraft enthaltendes Getränk oder Nahrungsmittel, **dadurch gekennzeichnet, dass** sie den Geschmacksverstärker für Süßstoff mit hoher Süßkraft nach Anspruch 1 oder 2 in Kombination mit beliebigen anderen Aromakomponenten enthält.

11. Süßstoff mit hoher Süßkraft enthaltende Zusammensetzung, Getränk oder Nahrungsmittel, **dadurch gekennzeichnet, dass** sie/es einen Süßstoff mit hoher Süßkraft und den Geschmacksverstärker für Süßstoff mit hoher Süßkraft nach Anspruch 1 oder 2 enthält.

## Revendications

1. Améliorant de goût pour édulcorant haute intensité, comprenant les (A), (B) et (C) suivants :
(A) spilanthol, ou un extrait ou une huile essentielle d'une plante contenant du spilanthol,
(B) acide quinique ou une composition contenant de l'acide quinique, et
(C) une composition contenant un polyphénol obtenue en soumettant un résidu de gousses de vanille, après élimination d'un composant aromatique, à une extraction avec un solvant hydro-organique.

2. Améliorant de goût pour édulcorant haute intensité selon la revendication 1, comprenant en outre au moins l'un des (D) et (E) suivants :
(D) polyphénol de thé vert ou une composition contenant un polyphénol de thé vert, et
(E) polyphénol de plante rosacée ou une composition contenant un polyphénol de plante rosacée.

3. Améliorant de goût pour édulcorant haute intensité selon la revendication 1, dans lequel la plante contenant du spilanthol est Spilanthes acmella ou Spilanthes acmella var. oleracea.

4. Améliorant de goût pour édulcorant haute intensité selon la revendication 1, dans lequel la composition contenant de l'acide quinique inclut un hydrolysat de grains de café contenant un dérivé d'acide quinique obtenu en purifiant un produit d'hydrolyse après avoir soumis un extrait de grains de café à une hydrolyse.

5. Améliorant de goût pour édulcorant haute intensité selon la revendication 1, dans lequel la composition contenant de l'acide quinique inclut une matière purifiée obtenue en obtenant un liquide d'extraction en soumettant des feuilles de thé à une extraction avec de l'eau puis en soumettant le liquide d'extraction à une purification avec un adsorbant.

6. Améliorant de goût pour édulcorant haute intensité selon la revendication 1, dans lequel la composition contenant un polyphénol inclut une matière purifiée obtenue en obtenant un liquide d'extraction en soumettant un résidu de gousses de vanille, après élimination d'un composant aromatique, à une extraction avec un solvant hydro-organique puis en soumettant le liquide d'extraction à une purification avec un adsorbant.

7. Améliorant de goût pour édulcorant haute intensité selon la revendication 2, dans lequel la composition contenant un polyphénol de plante rosacée inclut un extrait obtenu en soumettant une plante rosacée à une extraction avec de l'eau et/ou un solvant organique polaire.

8. Améliorant de goût pour édulcorant haute intensité selon la revendication 1, dans lequel l'édulcorant haute intensité est l'aspartame, le sucralose, l'acésulfame-K, la stevia ou le néotame.

9. Procédé d'amélioration d'un goût d'un édulcorant haute intensité, comprenant l'addition de l'améliorant de goût pour édulcorant haute intensité selon la revendication 1 ou 2 à l'édulcorant haute intensité ou à une boisson ou à un aliment contenant l'édulcorant haute intensité.

10. Composition aromatisante pour boisson ou aliment contenant un édulcorant haute intensité, **caractérisée en ce qu'**elle contient l'améliorant de goût pour édulcorant haute intensité selon la revendication 1 ou 2 combiné avec tous autres constituants aromatisants souhaités.

11. Composition d'édulcorant haute intensité, boisson ou aliment caractérisé(e) en ce qu'elle (il) contient un édulcorant haute intensité et l'améliorant de goût pour édulcorant haute intensité selon la revendication 1 ou 2.
